# EUROPÄISCHE PATENTANMELDUNG

(11) **EP 2 151 315 A2**
(43) Veröffentlichungstag der Anmeldung: **10.02.2010**
(21) Anmeldenummer: 09167099.2
(22) Anmeldetag: 03.08.2009
(51) Int. Cl.: B30B 9/24

(54) **Entfeuchtungsvorrichtung**

(30) Priorität: 04.08.2008 DE 102008036256
(71) Anmelder: BHS-Sonthofen GmbH, 87527 Sonthofen (DE)
(72) Erfinder: Schmid, Hans-Peter, 87545, Burgberg (DE); Günther, Heinz, 87545, Burgberg (DE)
(74) Vertreter: Herzog, Markus

(57) **Zusammenfassung**

Die Erfindung betrifft eine ausschließlich dem Entfeuchten eines auf einem Filterband (12) aufliegenden, feuchten Filterkuchens (14) dienende Vorrichtung (10), bei welcher eine drehbare Walze (18) mit einer Oberfläche (14a) des Filterkuchens (14) in Eingriff steht, wobei die drehbare Walze (18) eine Hohlwalze ist, deren Oberfläche (18b) zumindest abschnittsweise perforiert ist, die von der Hohlwalze (18) abgewandte Oberfläche (14b) des Filterkuchens (14) mit einem Kasten (20) in Eingriff steht, dessen dem Filterkuchen (14) zugewandte Oberfläche (20a) zumindest abschnittsweise perforiert ist, und wenigstens eines der Elemente, drehbare Hohlwalze (18) oder Kasten (20) mit einer Gasdruckvorrichtung (22, 23) verbunden ist, welche ein Gas oder Gasgemisch durch den Filterkuchen (14) hindurchtreibt. Dabei ist die Entfeuchtungsvorrichtung (10) dazu eingerichtet, schrittweise betrieben werden zu können und dabei die Entfeuchtung bei Stillstand des Filterbandes (12) vorzunehmen.

## Beschreibung

Die Erfindung betrifft nach einem ersten Aspekt eine ausschließlich dem Entfeuchten eines auf einem Filterband aufliegenden, feuchten Filterkuchens dienende Vorrichtung, bei welcher eine Walze mit einer Oberfläche des Filterkuchens in Eingriff bringbar ist. Die Walze ist eine Hohlwalze, deren Oberfläche zumindest abschnittsweise perforiert ist. Die von der Hohlwalze abgewandte Oberfläche des Filterkuchens steht mit einem Kasten in Eingriff, dessen dem Filterkuchen zugewandte Oberfläche zumindest abschnittsweise perforiert ist. Wenigstens eines der Elemente, Hohlwalze oder Kasten ist mit einer Gasdruckvorrichtung verbunden oder verbindbar. Die Entfeuchtungsvorrichtung umfasst eine Transportvorrichtung, zum Transportieren des Filterbandes mit dem darauf liegenden, feuchten Filterkuchen relativ zu der Hohlwalze und zu dem Kastens, und sie umfasst ferner eine Verstellvorrichtung, zum Verstellen der Relativlage zwischen der Hohlwalze und dem Kasten.

Die Erfindung betrifft nach einem zweiten Aspekt ein Verfahren zum Entfeuchten eines auf einem Filterband aufliegenden, feuchten Filterkuchens in einer Entfeuchtungsvorrichtung, bei welcher eine Walze mit einer Oberfläche des Filterkuchens in Eingriff bringbar ist. Die Walze ist eine Hohlwalze, deren Oberfläche zumindest abschnittsweise perforiert ist. Die von der Hohlwalze abgewandte Oberfläche des Filterkuchens steht mit einem Kasten in Eingriff, dessen dem Filterkuchen zugewandte Oberfläche zumindest abschnittsweise perforiert ist. Wenigstens eines der Elemente, Hohlwalze oder Kasten ist mit einer Gasdruckvorrichtung verbunden oder verbindbar.

Bekanntermaßen umfasst die Filtration von Suspensionen, also Gemischen aus einer flüssigen Phase und fein verteiltem Feststoff, üblicherweise die Teilschritte Filtrieren, Waschen und Entfeuchten.

Beim Filtrieren wird die Suspension in eine überwiegend feststofffreie Flüssigkeit, das sogenannte Filtrat, und einen flüssigkeitsarmen Feststoffanteil, den sogenannten Filterkuchen, getrennt, indem man die Suspension in einem Filter einem Filtertuch zuführt, das Feststoff zurückhält und Flüssigkeit passieren lässt. Der Filterkuchen ist nicht vollständig frei von Flüssigkeit. Er besteht vielmehr aus einem Haufwerk meist unterschiedlich und eher unregelmäßig geformter Partikel, die naturgemäß nicht mit ihrer gesamten Oberfläche aneinander anliegen. Es verbleibt vielmehr ein Zwischenraum, der als Porenvolumen bezeichnet wird und der mehr oder weniger mit Flüssigkeit gefüllt ist.

Beim Waschen wird diese Flüssigkeit, die häufig unerwünschte Eigenschaften aufweist, beispielsweise giftig oder in anderer Art und Weise umweltunverträglich ist, durch eine andere Flüssigkeit, meist Wasser, ersetzt. Aber auch diese Flüssigkeit verbleibt zumindest zu einem Teil im Porenvolumen.

Ziel des Entfeuchtungs-Schritts ist es, diese Restflüssigkeit aus dem Filterkuchen zu entfernen, um einen möglichst trockenen Filterkuchen zu erhalten. Dies ist wichtig, um die weitere Handhabung des Filterkuchens zu erleichtern, um bei der weiteren Verarbeitung des Filterkuchens störende Flüssigkeitsanteile fern zu halten, oder um bei einem anschließenden, üblicherweise durch Zufuhr thermischer Energie ablaufenden TrocknungsSchritt die für die Flüssigkeitsverdampfung aufzuwändende Energiemenge gering halten zu können.

Eine ausschließlich dem Entfeuchten dienende Entfeuchtungsvorrichtung weist dabei gegenüber einer in einer Filtrationsvorrichtung baulich integrierten Entfeuchtungsvorrichtung den Vorteil auf, dass sie sich besonders gut zur Nachrüstung an einer Filtrationsvorrichtung eignet, da im Prinzip lediglich dafür Sorge zu tragen ist, dass der vom Filter abgegebene Filterkuchen auf das Filterband der Entfeuchtungsvorrichtung aufgegeben wird. Durch die gesonderte Ausbildung der Entfeuchtungsvorrichtung von den Vorrichtungen zum Filtrieren und gewünschtenfalls Waschen braucht die vorgeordnete Filtrationsvorrichtung lediglich unter Berücksichtigung der beim Filtrieren und gewünschtenfalls Waschen auftretenden Drücke ausgebildet zu sein. Da die insbesondere beim mechanischen Komprimieren auftretenden Drücke üblicherweise erheblich größer sind und ausschließlich von der Entfeuchtungsvorrichtung aufgenommen zu werden brauchen, kann die Filtriervorrichtung entsprechend leichter und damit kostengünstiger ausgebildet sein.

Der Teilschritt des Filtrierens, welcher bei der Filtration vor dem Teilschritt des Entfeuchtens und ggf. auch vor dem Teilschritt des Waschens kommt, wird häufig derart durchgeführt, dass eine vorbestimmte Menge an Suspension auf ein Filtertuch aufgebracht wird. Dort kann zumindest ein Teil der Flüssigkeit aus der Suspension schwerkraftbedingt nach unten durch das Filtertuch hindurchtreten. Dieser Vorgang wird dabei in der Regel durch Saugwannen unterstützt, welche unterhalb des Filtertuches angeordnet sind, um zusätzlich Flüssigkeit aus der Suspension zu saugen. Nach einer vorbestimmten Zeit, wenn ein Großteil der Flüssigkeit die Suspension verlassen hat, wird der zurückgebliebene Filterkuchen von dem Filtertuch entfernt, um anschließend eine neue, vorbestimmte Menge an Suspension darauf aufzubringen. Dieser sich wiederholende Vorgang stellt einen diskontinuierlichen Prozess dar, welcher auch die dem Filtrieren nachgeordneten Teilschritte, wie etwa die Entfeuchtung, beeinflussen. Neben den soeben beschriebenen, diskontinuierlich arbeitenden Filtriervorrichtungen existieren jedoch auch kontinuierlich arbeitende Filtriervorrichtungen, welche kontinuierlich einen Filterkuchen ausgeben und zumeist technisch etwas aufwendiger in ihrer Konstruktion sind.

Aus der US 3,974,026 und der DE 31 42 054 A1 sind gattungsgemäße Entfeuchtungsvorrichtungen bekannt, die ausschließlich der Entfeuchtung eines Filterkuchens dienen, welcher beispielsweise von einer Abgabevorrichtung eines vorgeordneten Filters auf ein Filterband der Entfeuchtungsvorrichtung aufgegeben worden ist. Bei diesen bekannten Vorrichtungen wird der Filterkuchen durch einen zwischen einer Hohlwalze und einem Kasten gebildeten festen Spalt durchgeführt, um dort komprimiert zu werden. Um die Druckkraft auf den Filterkuchen beim Entfeuchten einstellen zu können, ist es vor der Durchführung des eigentlichen Entfeuchtungsbetriebs bei den bekannten Vorrichtungen möglich, die Relativlage zwischen Hohlwalze und Kasten, und somit den sich zwischen ihnen befindliche Spalt, zu verstellen.

Nachteilig bei den aus der US 3,974,026 und der DE 31 42 054 A1 bekannten Entfeuchtungsvorrichtungen ist, dass diese nur für einen kontinuierlich arbeitenden Betrieb ausgelegt sind. Dies bedeutet, dass das Filterband im Wesentlichen immer mit einer konstanten Geschwindigkeit zwischen der Walze und dem Kasten hindurchgeführt werden muss. Würde das Filterband zeitweise kurz anhalten, beispielsweise auf Grund des oben beschriebenen diskontinuierlichen Filterbetriebs, so würde der Abschnitt des Filterkuchens, welcher sich gerade zwischen der Walze und dem Kasten befindet, stärker entfeuchet werden als andere Abschnitte, da er länger der mechanischen Druckkraft ausgesetzt wäre und ggf. auch länger von einem Gas oder Gasgemisch durchströmt würde. Eine unterschiedlich starke Entfeuchtung von verschiedenen Abschnitten des Filterkuchens ist aber aus Qualtitätsgründen in der Regel unerwünscht, da hierdurch zum Beispiel die Weiterverarbeitung des Filterkuchens beeinträchtigt werden kann.

Um die bekannten Entfeuchtungsvorrichtungen mit einer diskontinuierlich arbeitenden Filtriervorrichtung koppeln zu können, wäre somit eine zwischengeschaltete Puffervorrichtung notwendig, welche aber technisch nur mit einem entsprechenden Aufwand zu realisieren wäre und daher unerwünscht ist.

Hinzu kommt, dass in einem diskontinuierlichen Betrieb durch das ständige Anhalten und erneute Anfahren des Filterbandes, wobei jedes mal Haftreibung zu überwinden wäre, die auftretenden mechanischen Belastungen bei den bekannten Entfeuchtungsvorrichtungen relativ hoch wären, was einen entsprechend schnellen Verschleiß zur Folge hätte.

Zum Stand der Technik sei ferner auf die DE 35 20 248 C2 verwiesen, bei welcher der Filterkuchen abschnittsweise von einem Pressenstempel komprimiert wird. Diese Vorrichtung kann ausschließlich diskontinuierlich betrieben werden und weist daher den Nachteil auf, dass sie nicht auf einfache Weise, d.h. ohne das Vorsehen einer Pufferanordnung oder dergleichen, an kontinuierlich arbeitende Filtrationsvorrichtungen gekoppelt werden kann.

Demgegenüber ist es Aufgabe der vorliegenden Erfindung, eine Entfeuchtungsvorrichtung der eingangs genannten Art und ein Entfeuchtungsverfahren der eingangs genannten Art anzugeben, welche es erlauben, eine effiziente Entfeuchtung des Filterkuchens auf einfache Weise flexibel durchzuführen, und sich insbesondere an einen kontinuierlichen oder diskontinuierlichen Betrieb einer vorgeschalteten Filtriervorrichtung anzupassen.

Diese Aufgabe wird erfindungsgemäß gelöst durch eine ausschließlich dem Entfeuchten eines auf einem Filterband aufliegenden, feuchten Filterkuchens dienende Vorrichtung, bei welcher eine drehbare Walze mit einer Oberfläche des Filterkuchens in Eingriff steht, wobei die drehbare Walze eine Hohlwalze ist, deren Oberfläche zumindest abschnittsweise perforiert ist, wobei die von der Hohlwalze abgewandte Oberfläche des Filterkuchens mit einem feststehenden Kasten in Eingriff steht, dessen dem Filterkuchen zugewandte Oberfläche zumindest abschnittsweise perforiert ist, und wobei wenigstens eines der Elemente, drehbare Hohlwalze oder feststehender Kasten mit einer Gasdruckvorrichtung verbunden ist, welche ein Gas oder Gasgemisch durch den Filterkuchen hindurchtreibt, wobei die Entfeuchtungsvorrichtung dazu eingerichtet ist, schrittweise betrieben werden zu können und dabei die Entfeuchtung bei Stillstand des Filterbandes vorzunehmen.

Die erfindungsgemäße Entfeuchtungsvorrichtung weist mit der drehbaren Hohlwalze und dem feststehenden Kasten typische, aus dem oben genannten Stand der Technik bekannte Merkmale auf, die eine Entfeuchtung in einem kontinuierlichen Betriebsmodus ermöglichen. Anders als im Stand der Technik ist die erfindungsgemäße Entfeuchtungsvorrichtung jedoch zudem dazu eingerichtet, schrittweise betrieben werden zu können. Dabei wird das oben beschriebene Problem einer ungleichmäßigen Entfeuchtung des Filterkuchens bei einem diskontinuierlichen Betriebsmodus dadurch gelöst, dass die Entfeuchtung ausschließlich bei Stillstand des Filterbandes stattfindet. Somit kann die erfindungsgemäße Entfeuchtungsvorrichtung mit dem Betrieb einer vorgeschalteten, diskontinuierlich arbeitenden Filtriervorrichtung synchronisiert werden, wobei vorzugsweise jede von der Filtriervorrichtung abgegebene Marge an Filterkuchen gleich lange und gleich stark zwischen der drehbaren Hohlwalze und dem feststehenden Kasten entfeuchtet wird.

Anzumerken sei noch, dass mit "feststehendem Kasten" hier im Gegensatz zu der "drehbaren Hohlwalze" gemeint ist, dass der Kasten nicht drehbar gelagert ist. Eine Ausrichtung des Kastens durch translatorische Bewegungen soll dagegen nicht ausgeschlossen werden.

Um die erfindungsgemäße Entfeuchtungsvorrichtung auf einfache Weise an den entweder kontinuierlichen oder diskontinuierlichen Betrieb einer vorgeschalteten Filtriervorrichtung anpassen zu können, ist die die Entfeuchtungsvorrichtung vorteilhafterweise dazu eingerichtet, dass ihr Filterband wahlweise zu einer kontinuierlichen Bewegung oder schrittweise angetrieben werden kann.

Die oben genannte Aufgabe wird gemäß dem ersten Aspekt der Erfindung weiterhin durch eine Entfeuchtungsvorrichtung der eingangs genannten Art gelöst, welche ferner eine erste Steuereinheit zum Steuern der Transportvorrichtung, eine zweite Steuereinheit zum Steuern der Verstellvorrichtung, und eine dritte Steuereinheit zum Ansteuern der ersten Steuereinheit und der zweiten Steuereinheit umfasst, um wahlweise die Entfeuchtungsvorrichtung in einem kontinuierlichen Betriebsmodus oder in einem diskontinuierlichen Betriebsmodus betreiben zu können, wobei die dritte Steuereinheit die erste Steuereinheit und die zweite Steuereinheit im kontinuierlichen Betriebsmodus zum kontinuierlichen Transportieren des Filterbandes und zum Aufbringen einer Druckkraft auf den Filterkuchen zwischen der Hohlwalze und dem Kasten ansteuert; und wobei die dritte Steuereinheit die erste Steuereinheit und die zweite Steuereinheit im diskontinuierlichen Betriebsmodus abwechselnd zum Transportieren des Filterbandes um eine vorbestimmte Vorschubstrecke und zum Aufbringen einer Druckkraft auf den Filterkuchen zwischen der Hohlwalze und dem Kasten ansteuert.

Mit Hilfe der ersten, zweiten und dritten Steuereinheit kann die erfindungsgemäße Entfeuchtungsvorrichtung wahlweise in einem kontinuierlichen oder in einem diskontinuierlichen Betriebsmodus betreiben werden. Infolgedessen kann die erfindungsgemäße Entfeuchtungsvorrichtung an auf unterschiedliche Art und Weise arbeitende Filtrationsvorrichtungen gekoppelt werden, ohne dass besondere Vorkehrungen, wie etwa das Bereitstellen einer Pufferanordnung zwischen Filtrationsvorrichtung und Entfeuchtungsvorrichtung, getroffen werden müssten. Durch das Vorsehen einer ersten, zweiten und dritten Steuereinheit kann ein vorbestimmtes Ablaufverhalten der Entfeuchtungsvorrichtung auf einfache Weise, beispielsweise durch einen Computerprogrammcode, definiert und bei Bedarf geändert werden.

Die dritte Steuereinheit sorgt dabei dafür, dass im diskontinuierlichen Betriebsmodus, während des laufenden Filterbetriebs die Relativlage zwischen Hohlwalze und Kasten zyklisch verändert wird, um nur während einer Verdichtungsphase eine mechanische Druckkraft im Spalt zwischen Hohlwalze und Kasten auf den Filterkuchen aufzubringen, nicht jedoch in einer Transportphase, in der das Filterband mit dem sich darauf befindlichen Filterkuchen transportiert wird.

In Weiterbildung des ersten Aspekts der Erfindung wird vorgeschlagen, dass die dritte Steuereinheit drei verschiedene Funktionssteuermittel umfasst: dem kontinuierlichen Betriebsmodus zugeordnete erste Funktionssteuermittel zum Transportieren des Filterbandes relativ zu der Hohlwalze und dem Kasten und zum Halten eines vorbestimmten ersten Abstands zwischen der Hohlwalze und dem Kasten während des Transportierens des Filterbandes, wobei der vorbestimmte erste Abstand derart bemessen ist, dass eine mechanische Druckkraft auf den Filterkuchen zwischen Hohlwalze und Kasten aufgebracht wird; dem diskontinuierlichen Betriebsmodus zugeordnete zweite Funktionssteuermittel zum Transportieren des Filterbandes relativ zu der Hohlwalze und zu dem Kasten um eine vorbestimmte Vorschubstrecke und zum Halten eines vorbestimmten zweiten Abstands zwischen der Hohlwalze und dem Kasten während des Transportierens des Filterbands; und ebenfalls dem diskontinuierlichen Betriebsmodus zugeordnete dritte Funktionssteuermittel zum Anhalten der Relativbewegung zwischen dem Filterband einerseits und der Hohlwalze und dem Kasten andererseits, und zum Einstellen des Abstands zwischen der Hohlwalze und dem Kasten auf einen vorbestimmten dritten Abstand, welcher kleiner ist als der vorbestimmte zweite Abstand und derart bemessen ist, dass eine mechanische Druckkraft auf den Filterkuchen zwischen Hohlwalze und Kasten aufgebracht wird. Dabei ist in dem diskontinuierlichen Betriebsmodus die dritte Steuereinheit zum abwechselnden Ansteuern der zweiten Funktionseinheit und der dritten Funktionseinheit ausgebildet.

Der sich zwischen der Hohlwalze und dem Kasten befindliche Spalt, durch welchen das Filterband mit dem Filterkuchen hindurchgeführt wird, kann je nach Einstellung der Relativlage zwischen Hohlwalze und Kasten und je nach Geometrie der dem Spalt zugewandten Oberflächen von Hohlwalze und Kasten längs der Transportrichtung des Filterkuchens in seiner Dicke variieren. Unter dem Ausdruck "Abstand zwischen Hohlwalze und Kasten" ist in der vorliegenden Anmeldung dabei jedoch stets der kleinste Abstand zwischen der dem Spalt zugewandten Oberfläche der Hohlwalze und der dem Spalt zugewandten Oberfläche des Kastens zu verstehen.

Gemäß der oben beschriebenen Weiterbildung des ersten Aspekts der Erfindung, bewirkt die erste Funktionseinheit im kontinuierlichen Betriebsmodus, dass das Filterband kontinuierlich durch einen Spalt zwischen der Hohlwalze und dem Kasten hindurch transportiert werden kann, während eine mechanische Druckkraft von diesen beiden Elementen auf den Filterkuchen ausgeübt wird. Gleichzeitig kann der Filterkuchen von einem Gas oder Gasgemisch durchströmt werden, um den Entfeuchtungsprozess zu verbessern. In diesem Betriebsmodus arbeitet die erfindungsgemäße Entfeuchtungsvorrichtung somit im Wesentlich auf die gleiche Art und Weise, wie dies von den eingangs genannten, gattungsgemäßen Entfeuchtungsvorrichtungen aus dem Stand der Technik bekannt ist.

Im diskontinuierlichen Betriebsmodus bewirken dagegen die zweite und die dritte Funktionseinheit, dass der Filterkuchen immer abwechselnd um eine vorbestimmte Vorschubstrecke zwischen der Hohlwalze und dem Kasten transportiert und dann zwischen diesen beiden Elementen mit einer mechanischen Druckkraft beaufschlagt wird.

Um im diskontinuierlichen Betriebsmodus während der Transportphase des Filterkuchens die Energieverluste durch Reibung möglichst gering zu halten, wird vorgeschlagen, dass der vorbestimmte zweite Abstand derart bemessen ist, dass im Wesentlichen keine mechanische Druckkraft auf den Filterkuchen zwischen der Hohlwalze und dem Kasten aufgebracht wird. Dies kann etwa dadurch geschehen, dass der zweite vorbestimmte Abstand größer gewählt wird als die Dicke des Filterkuchens vor der Behandlung in der Entfeuchtungsvorrichtung. Es ist jedoch auch möglich, den zweiten vorbestimmten Abstand gleich oder sogar geringfügig kleiner als die Dicke des Filterkuchens vor der Behandlung in der Entfeuchtungsvorrichtung zu wählen.

Um einerseits einen möglichst großen Umschlingungswinkel der Hohlwalze mit Filterkuchen realisieren zu können, andererseits aber hinsichtlich der Bahnführung des Filterbands keinen Beschränkungen unterworfen zu sein, wird in Weiterbildung des ersten Aspekts der Erfindung vorgeschlagen, dass in Laufrichtung des Filterkuchens vor oder/und nach der Hohlwalze wenigstens eine Führungswalze vorgesehen ist. Diese kann darüber hinaus ebenfalls eine zumindest abschnittsweise perforierte Oberfläche und eine Gasdruckvorrichtung aufweisen, um eine weitergehende Entfeuchtung des Filterkuchens erzielen zu können. Vorteilhafterweise ist die Gasdruckvorrichtung der wenigstens einen Führungswalze eine Unterdruckvorrichtung, welche Flüssigkeit aus dem Filterkuchen saugen kann.

Ferner kann, um Energieverluste durch Reibung in der Entfeuchtungsvorrichtung möglichst gering zu halten, die Hohlwalze eine drehbare Walze sein. Dies ist insbesondere dann von Vorteil, wenn die erfindungsgemäße Entfeuchtungsvorrichtung im kontinuierlichen Betriebsmodus betrieben werden soll, da hier das Filterband mit dem Filterkuchen durch den Spalt zwischen Hohlwalze und Kasten transportieren wird, während gleichzeitig eine Druckkraft darauf ausgeübt wird. Die drehbare Hohlwalze kann dann vorteilhafterweise derart gedreht werden, dass zwischen ihrer zumindest abschnittsweise perforierten Oberfläche und der dieser zugewandten Oberfläche des Filterkuchens im Wesentlichen keine Relativbewegung stattfindet.

Die mit der Hohlwalze oder dem Kasten verbundene Gasdruckvorrichtung kann eine Unterdruckvorrichtung sein, beispielsweise eine Vakuumpumpe, die Gas oder Gasgemisch von der einen Oberfläche des Filterkuchens zu dessen anderer Oberfläche saugt. Alternativ kann die Gasdruckvorrichtung aber auch eine Überdruckvorrichtung sein, welche Gas oder Gasgemisch von einer Oberfläche des Filterkuchens zu dessen anderer Oberfläche presst. In beiden Fällen wird die im Porenvolumen enthaltene Flüssigkeit durch das Gas oder Gasgemisch verdrängt, wodurch die Restfeuchtigkeit des Filterkuchens abnimmt. Auch die im Filterband enthaltene Flüssigkeit wird verdrängt, sodass nicht die Gefahr eines Rückeintritts dieser Flüssigkeit in den Filterkuchen besteht. Bevorzugt wird die wenigstens eine Gasdruckvorrichtung, d.h. die Überdruckvorrichtung oder/und die Unterdruckvorrichtung, derart angeordnet, dass sich in dem Filterkuchen eine im Wesentlichen vertikal nach unten gerichtete Strömungsrichtung von Flüssigkeit und Gas bzw. Gasgemisch einstellt, was die Entfeuchtung des Filterkuchens durch Gasdifferenzdruck erleichtert.

Da die Hohlwalze, insbesondere, wenn sie als drehbare Walze ausgebildet ist, im Wesentlichen auf ihrem gesamten Umfang perforiert ausgebildet sein muss, jedoch stets nur mit einem Teil ihres Umfangs dem feststehenden Kasten gegenüberliegend mit dem Filterkuchen in Eingriff steht, wird vorgeschlagen, dass entweder im Innenraum der Hohlwalze ein feststehender Verteilerkasten angeordnet ist, wobei an den Kontaktflächen des Verteilerkastens mit der Innenfläche der Hohlwalze vorzugsweise eine Dichtung vorgesehen ist, oder dass die Außenumfangsfläche der Hohlwalze zumindest in einem Teil von deren nicht mit dem Filterkuchen in Kontakt stehenden Umfangsabschnitt mit einem vollwandig ausgeführten Mantel umgeben ist, um einen unerwünschten Austritt von Gas oder Gasgemisch aus dem Innenraum der Hohlwalze verhindern zu können.

Als vorteilhaft hat es sich ferner erwiesen, wenn der Filterkuchen zumindest in dem Gasdurchtrittsabschnitt der Entfeuchtungsvorrichtung auf seiner vom Filterband abgewandten Oberfläche mittels eines Abdeckbands bedeckt ist, da hierdurch das Anhaften von Filterkuchen an der Oberfläche der Hohlwalze bzw. das Verstopfen der Perforation der Hohlwalze durch Filterkuchen vermieden werden kann. Dieses Abdeckband kann für Gas und/oder für Flüssigkeit vorzugsweise nach Art der zum Filtrieren benutzten Filterbänder durchlässig sein. Für den Fall der Gasdifferenzdruckentfeuchtung von der Seite der Presswalze her kann dieses Band in besonders vorteilhafter Weise auch so feinporös sein, dass beim Anlegen von Pressdrücken der kapillare Eintrittsdruck für Flüssigkeit nicht überschritten wird, so dass dieses Abdeckband nur für Pressgas zur Entfeuchtung des Filterkuchens durchlässig ist.

Ferner wird die oben genannte Aufgabe erfindungsgemäß gelöst durch ein Verfahren zum Entfeuchten eines auf einem Filterband aufliegenden, feuchten Filterkuchens in einer oben beschriebenen, erfindungsgemäßen Entfeuchtungsvorrichtung, bei welchem die Entfeuchtungsvorrichtung schrittweise betrieben werden kann, wobei die Entfeuchtung bei Stillstand des Filterbandes vorgenommen wird. Vorteilhafterweise kann das Filterband der Entfeuchtungsvorrichtung dabei wahlweise zu einer kontinuierlichen Bewegung oder schrittweise angetrieben werden. Es gelten diesbezüglich die gleichen Vorteile, welche oben zur Entfeuchtungsvorrichtung genannt wurden.

Ferner wird die oben genannte Aufgabe nach einem zweiten Aspekt der Erfindung auch durch ein Entfeuchtungsverfahren der eingangs genannten Art gelöst, bei welchem in einem kontinuierlichen Betriebsmodus das Filterband relativ zu der Hohlwalze und dem Kasten kontinuierlich transportiert wird, während ein vorbestimmter erster Abstand zwischen der Hohlwalze und dem Kasten gehalten wird, wobei der vorbestimmte erste Abstand derart bemessen ist, dass eine mechanische Druckkraft auf den Filterkuchen zwischen Hohlwalze und Kasten aufgebracht wird, und welches in einem diskontinuierlichen Betriebsmodus die sich zyklisch wiederholende Schrittfolge umfasst von:
a) Einstellen eines vorbestimmten zweiten Abstands zwischen der Hohlwalze und dem Kasten,
b) Transportieren des Filterbandes relativ zu der Hohlwalze und dem Kasten um eine vorbestimmte Vorschubstrecke,
c) Verringern des Abstands zwischen der Hohlwalze und dem Kasten auf einen vorbestimmten dritten Abstand, welcher derart bemessen ist, dass eine mechanische Druckkraft auf den Filterkuchen zwischen der Hohlwalze und dem Kasten aufgebracht wird, und
d) Halten des vorbestimmten dritten Abstands zwischen der Hohlwalze und dem Kasten während einer vorbestimmten Zeitdauer.

Indem das erfindungsgemäße Entfeuchtungsverfahren Verfahrensschritte für einen kontinuierlichen Betriebsmodus als auch für einen diskontinuierlichen Betriebsmodus umfasst, kann ein mit diesem Verfahren betriebene Entfeuchtungsvorrichtung sowohl an kontinuierlich als auch an diskontinuierlich arbeitende Filtriervorrichtungen angeschlossen werden. Eine Umrüstung der Vorrichtungen oder das Vorsehen zusätzlicher Anordnungen, wie etwa eine Puffervorrichtung, ist dabei nicht notwendig. Somit kann auf verhältnismäßig einfache Weise gegenüber den aus dem Stand der Technik bekannten Entfeuchtungsverfahren bzw. -vorrichtungen ein sehr hoher Grad an Einsatzflexibilität erzielt werden. Insbesondere ist es dabei möglich, auch bereits vorhandene Entfeuchtungsvorrichtung durch das erfindungsgemäße Entfeuchtungsverfahren flexibler zu machen.

Durch die sich zyklisch wiederholende Schrittfolge im diskontinuierlichen Betriebsmodus wird erreicht, dass während des laufenden Filterbetriebs die Relativlage zwischen Hohlwalze und Kasten verändert wird, um nur während einer Verdichtungsphase, d.h. während der Schritte c) und d), eine mechanische Druckkraft im Spalt zwischen Hohlwalze und Kasten auf den Filterkuchen aufzubringen, nicht jedoch in einer Transportphase, d.h. während des Schritts b), in welchem das Filterband mit dem sich darauf befindlichen Filterkuchen transportiert wird.

Um eine möglichst hohe Effizienz des Entfeuchtungsverfahrens zu erzielen, wird vorgeschlagen, dass das Verfahren in dem kontinuierlichen Betriebsmodus ferner den Schritt umfasst von: Durchtreiben von Gas oder Gasgemisch durch den Filterkuchen vermittels der Gasdruckvorrichtung. Dabei kann die Feuchtigkeit zusätzlich zum mechanischen Ausdrücken auch durch Saugen oder/und Blasen aus dem Filterkuchen entfernt werden, je nach Ausbildung und Ansteuerung der Gasdruckvorrichtung.

Aus den soeben beschriebenen Gründen ist es auch vorteilhaft, wenn in dem diskontinuierlichen Betriebsmodus während des Schritts des Haltens des vorbestimmten dritten Abstands (Schritt d)) Gas oder Gasgemisch durch den Filterkuchen vermittels der Gasdruckvorrichtung getrieben wird. Im Gegensatz zu dem kontinuierlichen Betriebsmodus ist es in dem diskontinuierlichen Betriebsmodus jedoch vorteilhaft, wenn nicht dauerhaft Gas - oder Gasgemisch durch den Filterkuchen getrieben wird, um während der Transportphase den Energiebedarf gering zu halten. Insbesondere wird daher vorgeschlagen, dass in dem diskontinuierlichen Betriebsmodus während des Schritts des Transportierens des Filterbandes (Schritt b)) kein Gas oder Gasgemisch durch den Filterkuchen vermittels der Gasdruckvorrichtung getrieben wird.

Um die auf die Entfeuchtungsvorrichtung und ihre Bauteile ausgeübten Kräfte vorteilhaft zu verteilen, wird vorgeschlagen, den Filterkuchen im kontinuierlichen Betriebsmodus nicht abrupt, sondern allmählich zu komprimieren. Dies kann vorteilhafterweise erreicht werden, indem die Hohlwalze relativ zu dem Kasten derart angeordnet wird, dass sich zwischen diesen beiden Elementen ein Spalt ergibt, der sich in Transportrichtung des Filterkuchens zunehmend verjüngt.

Der Erfinder hat dagegen aber erkannt, dass im diskontinuierlichen Betriebsmodus ein sich zunehmend verjüngender Spalt zwischen Hohlwalze und Kasten ungünstig ist. In dem Abschnitt, wo der Spalt besonders dünn ist, wird der Filterkuchen nämlich durch die erhöhte mechanische Druckkraft entsprechend stärker entfeuchtet als an breiteren Spaltabschnitten. In der Regel sollte der Filterkuchen aber überall möglichst gleichmäßig entfeuchtet werden. Zwar könnte man daran denken, die vorbestimmte Vorschubstrecke, um welche das Filterband mit dem Filterkuchen während des Schritts des Transportierens (Schritt b)) voran bewegt wird, entsprechend klein zu wählen, so dass im Wesentlichen der gesamte Filterkuchen wenigstens einmal in dem Abschnitt, wo der Spalt besonders dünn ist, von der Hohlwalze und dem Kasten komprimiert wird, doch würde dies die Effizienz des Entfeuchtungsprozesses schmälern.

In diesem Sinne wird in einer weiteren Ausführungsform des zweiten Aspekts der Erfindung ferner vorgeschlagen, dass die dem Filterkuchen zugewandte Oberfläche des Kastens im Wesentlichen teilzylindrisch ausgebildet ist, und dass im diskontinuierlichen Betriebsmodus Verstellungen der Relativlage zwischen der Hohlwalze und dem Kasten derart durchgeführt werden, dass die Mittellängsachse der Hohlwalze stets in einer Ebene liegt, zu welcher die teilzylindrische Oberfläche symmetrisch ist und welche die zur teilzylindrischen Oberfläche gehörende Zylinderachse enthält. Hierdurch ist der Spalt zwischen Hohlwalze und Kasten im diskontinuierlichen Betriebsmodus immer im Wesentlichen über die gesamte Länge in Transportrichtung des Filterkuchens etwa ähnlich dick ausgebildet. Der genaue Verlauf der Spaltdicke entlang der Transportrichtung des Filterkuchens hängt dabei von dem Verhältnis der Krümmungsradien ab, mit denen die zylindrische Oberflächen der Hohlwalze und die teilzylindrische Oberfläche des Kastens gekrümmt sind, sowie von dem jeweils gerade eingestellten Abstand zwischen diesen Oberflächen. Um einen Spaltverlauf mit in etwa ähnlicher Dicke erreichen zu können, ist es vorteilhaft, wenn der zur zylinderförmigen Walze gehörige Krümmungsradius etwa in der gleichen Größenordnung wie der zum teilzylindrische Kasten gehörige Krümmungsradius liegt.

Die Erfindung wird im Folgenden anhand der beigefügten Zeichnungen an einem Ausführungsbeispiel näher erläutert werden. Es stellt dar:
- Fig. 1: eine schematische Darstellung einer erfindungsgemäßen Entfeuchtungsvorrichtung in einem kontinuierlichen Betriebsmodus
- Fig. 2: eine schematische Darstellung der erfindungsgemäßen Entfeuchtungsvorrichtung von Fig. 1 in einem diskontinuierlichen Betriebsmodus während einer Transportphase und
- Fig. 3: eine schematische Darstellung der erfindungsgemäßen Entfeuchtungsvorrichtung von Fig. 1 und 2 in einem diskontinuierlichen Betriebsmodus während einer Verdichtungsphase.

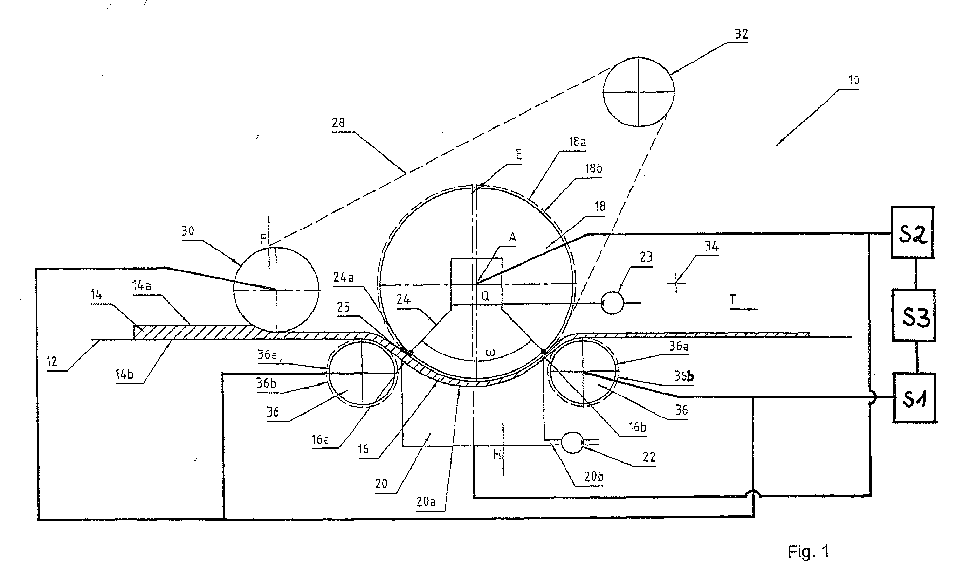

In Fig. 1 ist eine erfindungsgemäße Entfeuchtungsvorrichtung allgemein mit 10 bezeichnet. Sie umfasst ein Filterband 12, welches vermittels einer von einer ersten Steuereinheit S1 gesteuerten Transportvorrichtung in Transportrichtung T bewegt wird. Auf dem Filterband 12 befindet sich ein Filterkuchen 14, welcher einlaufseitig, d.h. in Fig. 1 links dargestellt, von einem losen Haufwerk von Partikeln gebildet ist, welche zwischen sich ein relativ großes, zumindest teilweise mit Flüssigkeit gefülltes Porenvolumen einschließen.

Das Filterband 12 mit dem auf ihm angeordneten Filterkuchen 14 wird in Transportrichtung T durch einen Arbeitsspalt 16 geleitet, der zwischen einer drehbaren Walze 18 und einem feststehenden Kasten 20 gebildet ist. Die den Arbeitsspalt 16 begrenzende Oberfläche 20a des Kastens 20 ist im Wesentlichen teilzylinderförmig ausgebildet, wobei die Zylinderachse in einer zur Zeichenebene der Fig. 1 orthogonalen Ebene E verläuft. Wie man erkennt, ist in dem kontinuierlichen Betriebsmodus die Drehachse A der Walze 18 mit Abstand von der Ebene E angeordnet, sodass sich der Arbeitsspalt 16 von seinem Eintrittsende 16a zu seinem Austrittsende 16b hin verjüngt.

In Folge dieser Ausbildung des Arbeitsspalts 16 wird der Filterkuchen 14 beim Durchlaufen des Arbeitsspalts 16 mechanisch komprimiert, was zu einer Verringerung des Porenvolumens im Filterkuchen 14 führt, und damit zu einem Auspressen von Flüssigkeit aus dem Filterkuchen 14. Um der ausgepressten Flüssigkeit das Austreten aus dem Filterkuchen 14 ermöglichen zu können, ist die Oberfläche 20a des Kastens 20 perforiert ausgebildet, und verfügt der Kasten 20 über einen Auslass 20b, über welchen die Flüssigkeit abgeleitet werden kann.

Um zwischen dem kontinuierlichen und einem diskontinuierlichen Betriebsmodus wechseln zu können und um im kontinuierlichen Betriebsmodus eine Einstellung an unterschiedliche Filterkuchenhöhen ermöglichen zu können, und auch, um das Maß der mechanischen Komprimierung des Filterkuchens 14 einstellen zu können, ist in dem dargestellten Ausführungsbeispiel der Kasten 20 in Höhenrichtung verstellbar ausgebildet, wie in Fig. 1 durch den Doppelpfeil H angedeutet ist. Ferner ist die Walze 18 in einer zur Höhenrichtung H orthogonal verlaufenden Richtung verstellbar angeordnet, wie in Fig. 1 durch den Doppelpfeil Q angedeutet ist. Grundsätzlich ist es jedoch auch denkbar, beide Bewegungsfreiheitsgrade an der Drehachse A der Walze 18 vorzusehen. Der Kasten 20 oder/und die Hohlwalze 18 können vermittels einer Verstellvorrichtung verstellt werden, welche durch eine zweite Steuereinheit S2 gesteuert wird.

Die Entfeuchtung des Filterkuchens 14 allein durch mechanisches Komprimieren hat den Nachteil, dass in dem Filterkuchen zwangsläufig noch ein, wenn auch deutlich verringertes, Restvolumen verbleibt, das mit Flüssigkeit gefüllt ist. Um auch diese Restflüssigkeit aus dem Filterkuchen austreiben zu können, ist die Walze 18 als Hohlwalze ausgebildet und es sind an ihrer Oberfläche 18b Perforationen vorgesehen, welche durch eine gestrichelte Linie 18a angedeutet sind. Ferner ist in dem Auslass 20b des Kastens 20 eine Pumpe 22 angeordnet, die in dem Kasten 20 einen Unterdruck erzeugt. Dieser Unterdruck saugt Gas, beispielsweise Luft, aus dem Innenraum der Hohlwalze 18 durch den Filterkuchen 14 in den Innenraum des Kastens 20 und saugt damit auch die Restfeuchtigkeit aus dem Filterkuchen 14 in den Innenraum des Kastens 20, von wo sie über den Auslass 20b abgeführt wird. Auf diese Weise kann sichergestellt werden, dass das Porenvolumen des Filterkuchens 14 im Wesentlichen vollständig entleert wird, sodass die größtmögliche Entfeuchtung des Filterkuchens 14 erzielt werden kann.

An dieser Stelle sei darauf hingewiesen, dass es auch Filterkuchen gibt, welche im Wesentlichen inkompressibel sind. In diesem Fall ist dafür Sorge zu tragen, dass die Drehachse A der Walze 18 ebenfalls in der Ebene E liegt und der Abstand zwischen der Walze 18 und dem Kasten 20 derart eingestellt wird, dass sich ein Arbeitsspalt 16 im Wesentlichen konstanter Dicke ergibt. Die Entfeuchtung erfolgt in diesem Fall ausschließlich mittels des Durchblasens mit Gas, vorzugsweise Luft.

Für den Fall, dass der Eintrittswiderstand des Filterkuchens 14 für Gas größer ist als der durch das erzeugbare Vakuum entstehende Druckunterschied zum Umgebungsdruck, reicht das vorstehend beschriebene Arbeiten mit Unterdruck nicht aus. In diesem Fall kann der Innenraum der Hohlwalze 18 unter Zuhilfenahme geeigneter Mittel, insbesondere einer Pumpe 23, unter Überdruck gesetzt werden, sodass sich zwischen der Hohlwalze 18 und dem Kasten 20 eine Druckdifferenz ergibt, die größer ist als der Umgebungsdruck. Reicht allein der Überdruck in der Hohlwalze 18 aus, um den Eingangsdruck des Filterkuchens 14 überwinden zu können, so braucht auf Seite des Kastens 20 kein Unterdruck erzeugt zu werden, d.h. es kann auf die Pumpe 22 verzichtet werden.

Um verhindern zu können, dass der in der Hohlwalze 18 erzeugte Überdruck durch die Perforation 18a der Oberfläche 18b in einem nicht von Filterkuchen 14 umschlungenen Bereich austritt, kann im Innenraum der Hohlwalze 18 ein feststehender Druckkasten 24 vorgesehen sein, der das Austreten des Druckgases auf einen von Filterkuchen umschlungenen Winkelbereich ω beschränkt. An den Kontaktstellen 24a dieses Druckkastens 24 mit der Innenwandung der Walze 18 sind Dichtungen 25 vorgesehen, welche einen unerwünschten Gasaustritt verhindern oder zumindest reduzieren. Alternativ könnte aber auch der Außenumfang der Walze 18 in dem nicht von Filterkuchen umschlungenen Umfangsabschnitt mit einem dichtenden Mantel umgeben sein. Sofern das Arbeiten mit Unterdruck auf Seiten des Kastens 20 ausreicht, kann sowohl auf das Vorsehen eines Druckkastens 24 als auch auf das Vorsehen eines dichtenden Mantels verzichtet werden.

Um ein Verstopfen der Perforation der Oberfläche 18a der Hohlwalze 18 mit Filterkuchen verhindern zu können, kann die der Walze 18 zugewandte Oberfläche 14a des Filterkuchens 14 vor Eintritt in den Arbeitsspalt 16 mit einem Abdeckband 28 abgedeckt werden, welches ein Anhaften von Filterkuchenmaterial an der Walze 18 in ähnlicher Art und Weise verhindert, wie dies das Filterband 12 auf Seite der Oberfläche 14b des Filterkuchens 14 mit der Oberfläche 20a des Kastens 20 verhindert. Dieses Abdeckband 28 ist in ähnlicher Weise für Gas und/oder für Flüssigkeit durchlässig wie die zum Filtrieren benutzten Filterbänder und wird mittels Führungswalzen 30 und 32 auf einem endlosen Weg um die Hohlwalze 18 herum geführt. Es versteht sich, dass im Fall des Vorsehens eines Dichtungsmantels noch wenigstens eine weitere derartige Führungswalze vorgesehen sein kann, deren Drehachse beispielsweise an der in Fig. 1 mit 34 bezeichneten Stelle angeordnet sein kann.

Die Führungswalze 30 ist in Höhenrichtung verstellbar ausgebildet, wie in Fig. 1 durch den Doppelpfeil F angedeutet ist. In dem kontinuierlichen Betriebsmodus kann, wie in Fig. 1 gezeigt, die Führungswalze 30 dabei in Höhenrichtung derart eingestellt sein, dass sie in Kontakt mit der Oberfläche 14a des Filterkuchens 14 steht, um ihn somit bereits vor der Durchführung durch den Arbeitsspalt 16 etwas zu komprimieren. Durch diese Vorkompression kann die im Arbeitsspalt 16 durchzuführende Entfeuchtungsarbeit reduziert werden.

Nachzutragen ist noch, dass auch die Umschlingung der Hohlwalze 18 mit Filterband 12 und Filterkuchen 14 durch Führungswalzen 36 und 36 unterstützt wird, welche gewünschtenfalls, um die Entfeuchtung des Filterkuchens zu unterstützen, ebenfalls als Saugwalzen ausgebildet sein können, deren Oberfläche 36a durch die gestrichelte Linie 36b angedeutete Perforationen aufweist. Auch kann die Lage der Führungswalzen 36 und 36 veränderbar sein, beispielsweise um die Form des Arbeitsspalts 16 zu beeinflussen.

Die Führungswalzen 36 und 36 sind Bestandteil der von der ersten Steuereinheit S1 gesteuerten Transportvorrichtung. Die Transportvorrichtung kann jedoch noch weitere Elemente umfassen. Beispielsweise kann auch die Führungswalze 30, zumindest wenn sie mit der Oberfläche 14a des Filterkuchens 14 in Kontakt steht, Teil der Transportvorrichtung sein und entsprechend von der ersten Steuereinheit S1 angesteuert werden.

Ferner können weitere (nicht dargestellte) Führungswalzen das Filterband 12 auf einem geschlossenen Kreislauf führen, wobei zwischen der Abgabe des entfeuchteten und gegebenenfalls komprimierten Filterkuchens 14 und der Aufgabe frischen, noch feuchten Filterkuchens 14 eine Reinigung des Filterbandes 12 vorgesehen sein kann.

Die erste Steuervorrichtung S1 und die zweite Steuervorrichtung S2 werden ihrerseits von einer dritten Steuervorrichtung S3 angesteuert, welche den Einsatz der Transportvorrichtung und der Verstellvorrichtung je nach gewähltem Betriebsmodus zeitlich aufeinander abstimmt. Auch kann von der dritten Steuereinheit der Einsatz der Gasdruckvorrichtung 22, 23 direkt oder indirekt gesteuert und zeitlich mit dem Einsatz der Transportvorrichtung und der Verstellvorrichtung abgestimmt werden.

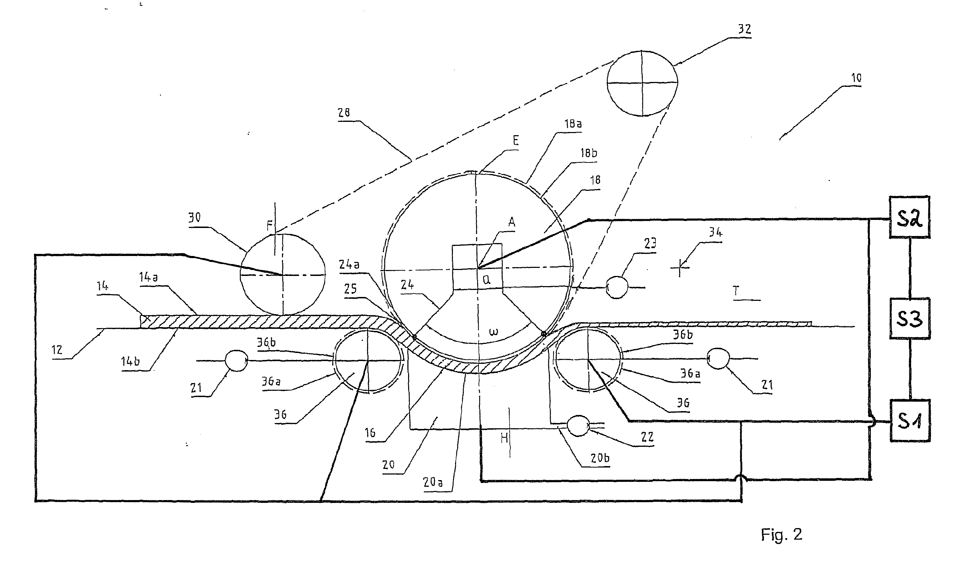

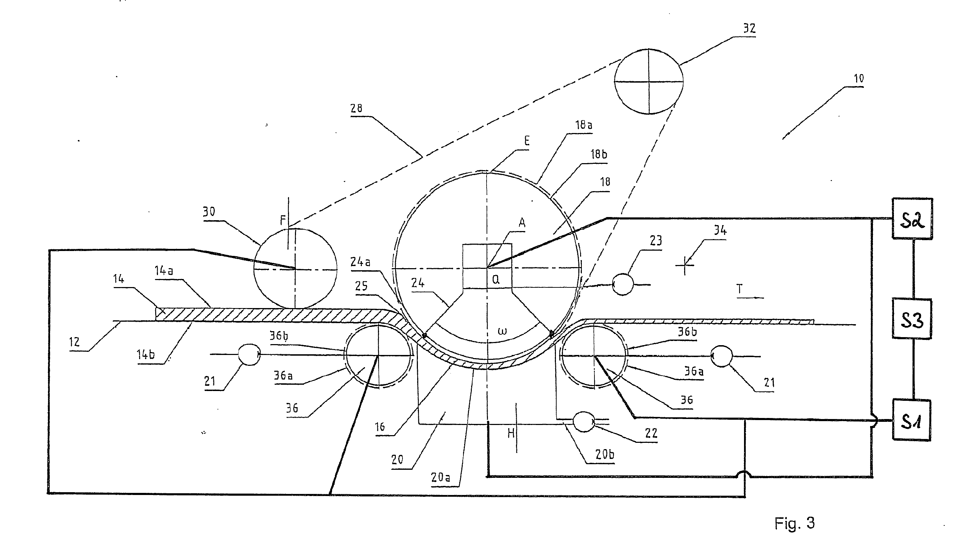

Figuren 2 und 3 zeigen schematische Darstellungen der erfindungsgemäßen Entfeuchtungsvorrichtung von Fig. 1, welche sich jedoch hier in einem diskontinuierlichen Betriebsmodus befindet. In dem diskontinuierlichen Betriebsmodus sorgt die dritte Steuereinheit S3 dafür, dass sich eine in Fig. 2 gezeigte Transportphase und eine in Fig. 3 gezeigte Verdichtungsphase zyklisch miteinander abwechseln. Somit wird im diskontinuierlichen Betriebsmodus die Relativlage zwischen Hohlwalze 18 und Kasten 20 während des laufenden Entfeuchtungsverfahrens immer wieder verändert.

Während der Transportphase wird das Filterband 12 mit dem sich darauf befindlichen Filterkuchen 14 um eine vorbestimmte Vorschubstrecke in Transportrichtung T vorwärts bewegt. Die vorbestimmte Vorschubstrecke wird dabei durch eine nicht dargestellte, vorgeschaltete, diskontinuierlich arbeitende Filtriervorrichtung vorgegeben. Um gewährleisten zu können, dass jede Stelle des Filterkuchens 14 wenigstens einmal im Arbeitsspalt zum Halten kommt und dann anschließend in der Verdichtungsphase entfeuchtet werden kann, ist die durch den umschlungenen Winkelbereich ω definierte Länge des Arbeitsspalts 16 größer oder gleich der vorbestimmten Vorschubstrecke auszulegen. Vorzugsweise stellt die Länge des Arbeitsspalts 16 dabei ein ganzzahliges Vielfaches der vorbestimmten Vorschubstrecke dar, damit jede Stelle des Filterkuchens 14 gleich oft zwischen der Hohlwalze 18 und dem Kasten 20 entfeuchtet wird. In dem in den Figuren 2 und 3 gezeigten Ausführungsbeispiel entspricht die Länge der vorbestimmten Vorschubstrecke, um welche das Filterband in der Transportphase voran bewegt wird, etwa der gesamten Länge des Arbeitsspalts 16. In Fig. 2 ist die Transportphase dabei gerade an ihrem Ende angelangt, so dass das Filterband 12 nun gestoppt wird.

Während der Transportphase wird dabei auf den Filterkuchen 14 im Wesentlichen keine mechanische Druckkraft aufgebracht. Hierzu wird die Relativlage zwischen der Hohlwalze 18 und dem Kasten 20 mittels einer nicht dargestellten Verstellvorrichtung so eingestellt, dass die Dicke des Arbeitsspalts 16 etwa der Dicke des Filterkuchens 14 entspricht, welche dieser aufweist, bevor er in die Entfeuchtungsvorrichtung 10 gelangt. Es sei angemerkt, dass der Arbeitsspalt 16 auch auf eine größere Dicke eingestellt werden könnte. Auch ist die Führungswalze 30 in der Höhenrichtung im diskontinuierlichen Betriebsmodus, und hier insbesondere während der Transportphase, derart eingestellt, dass sie im Wesentlichen keinen mechanischen Druck auf den Filterkuchen 14 ausübt. Indem in der Transportphase nicht auf den Filterkuchen 14 mechanisch gedrückt wird, kann der Transport des Filterbandes 12 mit dem Filterkuchen 14 ohne nennenswerte Energieverluste durch Reibung erreicht werden.

Je nach eingestellter Dicke des Arbeitsspalts 16 während der Transportphase ist eine effiziente Entfeuchtung des Filterkuchens 14 durch diese Gasdruckvorrichtung unter Umständen nicht möglich, da bei fehlender mechanischer Druckkraft auf den Filterkuchen 14 die Gefahr besteht, dass von der Vakuumpumpe 23 am Arbeitsspalt 16 nur Umgebungsluft angesaugt wird bzw. dass der von der Pumpe 23 bereitgestellte Überdruck am Arbeitsspalt 16 an die Umgebung entweicht, wodurch das Gas oder Gasgemisch den Filterkuchen nicht effizient durchströmen kann. Aus diesem Grund wird während der Transportphase vorzugsweise auch die Gasdruckvorrichtung, welche mit der Hohlwalze 18 oder/und dem Kasten 20 verbunden ist, d.h. die Pumpe 22 oder/und die Pumpe 23, deaktiviert.

Ferner können während der Transportphase wahlweise auch mit den Führungswalzen 36 und 36 verbundene Pumpen 21 deaktiviert werden, um den Reibwiderstand zu minimieren. Dies ist jedoch keinesfalls zwingend, so dass die den Führungswalzen 36 und 36 zugeordneten Gasdruckvorrichtungen auch während der Transportphase aktiviert sein können, um die Entfeuchtung des Filterkuchens 14 zu fördern, während dieser über sie geführt wird.

Anders als bei dem in Fig. 1 gezeigten kontinuierlichen Betriebsmodus wird im diskontinuierlichen Betriebsmodus die Relativlage zwischen der Hohlwalze 18 und dem Kasten 20 vorzugsweise immer so eingestellt, dass der Arbeitsspalt 16 über seine gesamte Länge in Transportrichtung T etwa gleich dick ist, wodurch eine möglichst gleichmäßige Entfeuchtung des Filterkuchens 14 in der in Fig. 3 gezeigten Verdichtungsphase erzielt werden kann. Mit anderen Worten bedeutet dies, dass die Drehachse A der Hohlwalze 18 im diskontinuierlichen Betriebsmodus nur innerhalb der Ebene E bewegt wird.

In der Verdichtungsphase steht das Filterband 12 mit dem sich darauf befindlichen Filterkuchen 14 still, d.h. es wird nicht in Transportrichtung T durch den Arbeitsspalt 16 bewegt. Gleichzeitig wird vermittels der nicht dargestellten Verstellvorrichtung die Relativlage zwischen Hohlwalze 18 und Kasten 20 derart eingestellt, dass im Arbeitsspalt 16 ein mechanischer Druck auf den Filterkuchen 14 ausgeübt wird, welcher zur zumindest teilweisen Entfeuchtung des Filterkuchens 14 führt. Die Entfeuchtung wird zusätzlich noch dadurch gefördert, dass die mit der Hohlwalze 18 oder/und dem Kasten 20 verbundene Gasdruckvorrichtung während der Verdichtungsphase aktiviert wird, um ein Gas oder Gasgemisch durch den Filterkuchen hindurchzutreiben.

Nach einer vorbestimmten, für den gewünschten Entfeuchtungsgrad ausreichend langen Zeitdauer wird die Verdichtungsphase dann beendet und es wird als nächstes wieder die Transportphase durchgeführt.

Die vorliegende Erfindung ist nicht auf das oben beschriebene Ausführungsbeispiel beschränkt, sondern es können davon auch diverse Modifikationen gemacht werden. Beispielsweise könnte die Pumpe 22 auch dazu dienen, im Kasten 20 einen Überdruck zu erzeugen, während die Pumpe 23 dazu verwendet werden könnte, in der Hohlwalze 18 einen Unterdruck zu erzeugen.

Weitere Gesichtspunkte der Erfindung werden durch die folgenden weiteren Aspekte beschrieben:
A. Ausschließlich dem Entfeuchten eines auf einem Filterband aufliegenden, feuchten Filterkuchens dienende Vorrichtung, bei welcher eine drehbare Walze mit einer Oberfläche des Filterkuchens in Eingriff steht,
   **dadurch gekennzeichnet, dass** die drehbare Walze eine Hohlwalze ist, deren Oberfläche zumindest abschnittsweise perforiert ist, dass die von der Hohlwalze abgewandte Oberfläche des Filterkuchen mit einem feststehenden Kasten in Eingriff steht, dessen dem Filterkuchen zugewandte Oberfläche zumindest abschnittsweise perforiert ist, und dass wenigstens eines der Elemente, drehbare Hohlwalze oder feststehender Kasten mit einer Gasdruckvorrichtung verbunden ist, welche ein Gas oder Gasgemisch durch den Filterkuchen hindurchtreibt.
B. Entfeuchtungsvorrichtung nach Aspekt A,
   **dadurch gekennzeichnet, dass** die Gasdruckvorrichtung eine Unterdruckvorrichtung ist, welche Gas oder Gasgemisch mittels Unterdruck durch den Filterkuchen saugt.
C. Entfeuchtungsvorrichtung nach Aspekt A oder B,
   **dadurch gekennzeichnet, dass** die Gasdruckvorrichtung eine Überdruckvorrichtung ist, welche Gas oder Gasgemisch mittels Überdruck durch den Filterkuchen presst.
D. Entfeuchtungsvorrichtung nach einem der Aspekte A bis C,
   **dadurch gekennzeichnet, dass** im Innenraum der Hohlwalze ein feststehender Verteilerkasten angeordnet ist, wobei an den Kontaktflächen des Verteilerkastens mit der Innenfläche der Hohlwalze vorzugsweise eine Dichtung vorgesehen ist.
E. Entfeuchtungsvorrichtung nach einem der Aspekte A bis D,
   **dadurch gekennzeichnet, dass** die Außenumfangsfläche der Hohlwalze zumindest in einem Teil von deren nicht mit dem Filterkuchen in Kontakt stehenden Umfangsabschnitt mit einem vollwandig ausgeführten Mantel umgeben ist.
F. Entfeuchtungsvorrichtung nach einem der Aspekte A bis E,
   **dadurch gekennzeichnet, dass** in Laufrichtung des Filterkuchens vor oder/und nach der Hohlwalze wenigstens eine Führungswalze vorgesehen ist.
G. Entfeuchtungsvorrichtung nach einem der Aspekte A bis F,
   **dadurch gekennzeichnet, dass** der Filterkuchen zumindest in dem Gasdurchtrittsabschnitt der Entfeuchtungsvorrichtung auf seiner vom Filterband abgewandten Oberfläche mittels eines Abdeckbands bedeckt ist.
H. Entfeuchtungsvorrichtung nach einem der Aspekte A bis G,
   **dadurch gekennzeichnet, dass** das Volumen des Filterkuchens zusätzlich zum Gasdifferenzdruck durch Ausüben mechanischen Drucks verringert wird.
I. Entfeuchtungsvorrichtung nach einem der Aspekte A bis H,
   **dadurch gekennzeichnet, dass** die Hohlwalze oder/und die wenigstens eine Führungswalze relativ zum feststehenden Kasten verlagerbar angeordnet ist bzw. sind.
J. Entfeuchtungsvorrichtung nach einem der Aspekte A bis I,
   **dadurch gekennzeichnet, dass** das Filterband zu einer kontinuierlichen Bewegung angetrieben ist.
K. Filtrationsvorrichtung, welche unabhängig von den Vorrichtungen zum Filtrieren und gewünschtenfalls Waschen eine von diesen Vorrichtungen gesondert ausgebildete und diesen nachgeordnete Entfeuchtungsvorrichtung gemäß einem der vorstehenden Aspekte umfasst.

## Patentansprüche

1. Ausschließlich dem Entfeuchten eines auf einem Filterband (12) aufliegenden, feuchten Filterkuchens (14) dienende Vorrichtung (10), bei welcher eine drehbare Walze (18) mit einer Oberfläche (14a) des Filterkuchens (14) in Eingriff steht,
wobei die drehbare Walze (18) eine Hohlwalze ist, deren Oberfläche (18b) zumindest abschnittsweise perforiert ist, wobei die von der Hohlwalze (18) abgewandte Oberfläche (14b) des Filterkuchens (14) mit einem feststehenden Kasten (20) in Eingriff steht, dessen dem Filterkuchen (14) zugewandte Oberfläche (20a) zumindest abschnittsweise perforiert ist, und wobei wenigstens eines der Elemente, drehbare Hohlwalze (18) oder feststehender Kasten (20) mit einer Gasdruckvorrichtung (22, 23) verbunden ist, welche ein Gas oder Gasgemisch durch den Filterkuchen (14) hindurchtreibt,
**dadurch gekennzeichnet, dass** die Entfeuchtungsvorrichtung (10) dazu eingerichtet ist, schrittweise betrieben werden zu können und dabei die Entfeuchtung bei Stillstand des Filterbandes (12) vorzunehmen.

2. Entfeuchtungsvorrichtung (10) nach Anspruch 1,
**dadurch gekennzeichnet, dass** die Entfeuchtungsvorrichtung (10) dazu eingerichtet ist, dass ihr Filterband (12) wahlweise zu einer kontinuierlichen Bewegung oder schrittweise angetrieben werden kann.

3. Ausschließlich dem Entfeuchten eines auf einem Filterband (12) aufliegenden, feuchten Filterkuchens (14) dienende Vorrichtung (10), bei welcher eine Walze (18) mit einer Oberfläche (14a) des Filterkuchens (14) in Eingriff bringbar ist, wobei:
- die Walze (18) eine Hohlwalze ist, deren Oberfläche (18b) zumindest abschnittsweise perforiert ist,
- die von der Hohlwalze (18) abgewandte Oberfläche (14b) des Filterkuchens (14) mit einem Kasten (20) in Eingriff steht, dessen dem Filterkuchen (14) zugewandte Oberfläche (20a) zumindest abschnittsweise perforiert ist,
- wenigstens eines der Elemente, Hohlwalze (18) oder Kasten (20) mit einer Gasdruckvorrichtung (22, 23) verbunden oder verbindbar ist,
- die Entfeuchtungsvorrichtung (10) eine Transportvorrichtung umfasst, zum Transportieren des Filterbandes (12) mit dem darauf liegenden, feuchten Filterkuchen (14) relativ zu der Hohlwalze (18) und zu dem Kastens (20), und
- die Entfeuchtungsvorrichtung (10) eine Verstellvorrichtung umfasst, zum Verstellen der Relativlage zwischen der Hohlwalze (18) und dem Kasten (20),
**dadurch gekennzeichnet, dass** die Entfeuchtungsvorrichtung (10) ferner umfasst:
- eine erste Steuereinheit (S1) zum Steuern der Transportvorrichtung,
- eine zweite Steuereinheit (S2) zum Steuern der Verstellvorrichtung, und
- eine dritte Steuereinheit (S3) zum Ansteuern der ersten Steuereinheit (S1) und der zweiten Steuereinheit (S2), um wahlweise die Entfeuchtungsvorrichtung (10) in einem kontinuierlichen Betriebsmodus oder in einem diskontinuierlichen Betriebsmodus betreiben zu können,
wobei die dritte Steuereinheit (S3) die erste Steuereinheit (S1) und die zweite Steuereinheit (S2) im kontinuierlichen Betriebsmodus zum kontinuierlichen Transportieren des Filterbandes (12) und zum Aufbringen einer Druckkraft auf den Filterkuchen (14) zwischen der Hohlwalze (18) und dem Kasten (20) ansteuert; und
wobei die dritte Steuereinheit (S3) die erste Steuereinheit (S1) und die zweite Steuereinheit (S2) im diskontinuierlichen Betriebsmodus abwechselnd zum Transportieren des Filterbandes (12) um eine vorbestimmte Vorschubstrecke und zum Aufbringen einer Druckkraft auf den Filterkuchen (14) zwischen der Hohlwalze (18) und dem Kasten (20) ansteuert.

4. Entfeuchtungsvorrichtung nach Anspruch 3,
**dadurch gekennzeichnet, dass** die dritte Steuereinheit (S3) umfasst:
- dem kontinuierlichen Betriebsmodus zugeordnete erste Funktionssteuermittel zum Transportieren des Filterbandes (12) relativ zu der Hohlwalze (18) und dem Kasten (20) und zum Halten eines vorbestimmten ersten Abstands zwischen der Hohlwalze (18) und dem Kasten (20) während des Transportierens des Filterbandes (12), wobei der vorbestimmte erste Abstand derart bemessen ist, dass eine mechanische Druckkraft auf den Filterkuchen zwischen Hohlwalze (18) und Kasten (20) aufgebracht wird,
- dem diskontinuierlichen Betriebsmodus zugeordnete zweite Funktionssteuermittel zum Transportieren des Filterbandes (12) relativ zu der Hohlwalze (18) und zu dem Kasten (20) um eine vorbestimmte Vorschubstrecke und zum Halten eines vorbestimmten zweiten Abstands zwischen der Hohlwalze (18) und dem Kasten (20) während des Transportierens des Filterbands (12), und
- ebenfalls dem diskontinuierlichen Betriebsmodus zugeordnete dritte Funktionssteuermittel zum Anhalten der Relativbewegung zwischen dem Filterband (12) einerseits und der Hohlwalze (18) und dem Kasten (20) andererseits, und zum Einstellen des Abstands zwischen der Hohlwalze (18) und dem Kasten (20) auf einen vorbestimmten dritten Abstand, welcher kleiner ist als der vorbestimmte zweite Abstand und derart bemessen ist, dass eine mechanische Druckkraft auf den Filterkuchen zwischen Hohlwalze (18) und Kasten (20) aufgebracht wird,
wobei in dem diskontinuierlichen Betriebsmodus die dritte Steuereinheit (S3) zum abwechselnden Ansteuern der zweiten Funktionseinheit und der dritten Funktionseinheit ausgebildet ist.

5. Entfeuchtungsvorrichtung nach Anspruch 4,
**dadurch gekennzeichnet, dass** der vorbestimmte zweite Abstand derart bemessen ist, dass im Wesentlichen keine mechanische Druckkraft auf den Filterkuchen zwischen der Hohlwalze (18) und dem Kasten (20) aufgebracht wird.

6. Entfeuchtungsvorrichtung nach einem der vorhergehenden Ansprüche,
**dadurch gekennzeichnet, dass** in Laufrichtung (T) des Filterkuchens (14) vor oder/und nach der Hohlwalze (18) wenigstens eine Führungswalze (36, 36) vorgesehen ist.

7. Entfeuchtungsvorrichtung nach einem der vorhergehenden Ansprüche,
**dadurch gekennzeichnet, dass** im Innenraum der Hohlwalze (18) ein feststehender Verteilerkasten (24) angeordnet ist, wobei an den Kontaktflächen (24a) des Verteilerkastens (24) mit der Innenfläche der Hohlwalze (18) vorzugsweise eine Dichtung (25) vorgesehen ist.

8. Entfeuchtungsvorrichtung nach einem der vorhergehenden Ansprüche,
**dadurch gekennzeichnet, dass** die Außenumfangsfläche der Hohlwalze (18) zumindest in einem Teil von deren nicht mit dem Filterkuchen (14) in Kontakt stehenden Umfangsabschnitt mit einem vollwandig ausgeführten Mantel (26) umgeben ist.

9. Entfeuchtungsvorrichtung nach einem der vorhergehenden Ansprüche,
**dadurch gekennzeichnet, dass** der Filterkuchen (14) zumindest in dem Gasdurchtrittsabschnitt der Entfeuchtungsvorrichtung (10) auf seiner vom Filterband (12) abgewandten Oberfläche (14a) mittels eines Abdeckbands (28) bedeckt ist.

10. Verfahren zum Entfeuchten eines auf einem Filterband (12) aufliegenden, feuchten Filterkuchens (14) in einer Entfeuchtungsvorrichtung (10) nach einem der vorhergehenden Ansprüche,
**dadurch gekennzeichnet, dass** die Entfeuchtungsvorrichtung (10) schrittweise betrieben werden kann, wobei die Entfeuchtung bei Stillstand des Filterbandes (12) vorgenommen wird.

11. Entfeuchtungsverfahren nach Anspruch 10,
**dadurch gekennzeichnet, dass** das Filterband (12) der Entfeuchtungsvorrichtung (10) wahlweise zu einer kontinuierlichen Bewegung oder schrittweise angetrieben werden kann.

12. Verfahren zum Entfeuchten eines auf einem Filterband (12) aufliegenden, feuchten Filterkuchens (14) in einer Entfeuchtungsvorrichtung (10), bei welcher eine Walze (18) mit einer Oberfläche (14a) des Filterkuchens (14) in Eingriff bringbar ist, wobei:
- die Walze (18) eine Hohlwalze ist, deren Oberfläche (18a) zumindest abschnittsweise perforiert ist,
- die von der Hohlwalze (18) abgewandte Oberfläche (14b) des Filterkuchens (14) mit einem Kasten (20) in Eingriff steht, dessen dem Filterkuchen (14) zugewandte Oberfläche (20a) zumindest abschnittsweise perforiert ist,
- wenigstens eines der Elemente, Hohlwalze (18) oder Kasten (20) mit einer Gasdruckvorrichtung (22, 23) verbunden oder verbindbar ist,
**dadurch gekennzeichnet, dass** in einem kontinuierlichen Betriebsmodus das Filterband (12) relativ zu der Hohlwalze (18) und dem Kasten (20) kontinuierlich transportiert wird, während ein vorbestimmter erster Abstand zwischen der Hohlwalze (18) und dem Kasten (20) gehalten wird, wobei der vorbestimmte erste Abstand derart bemessen ist, dass eine mechanische Druckkraft auf den Filterkuchen zwischen Hohlwalze (18) und Kasten (20) aufgebracht wird,
und dass das Verfahren in einem diskontinuierlichen Betriebsmodus die sich zyklisch wiederholende Schrittfolge umfasst von:
a) Einstellen eines vorbestimmten zweiten Abstands zwischen der Hohlwalze (18) und dem Kasten (20),
b) Transportieren des Filterbandes (12) relativ zu der Hohlwalze (18) und dem Kasten (20) um eine vorbestimmte Vorschubstrecke,
c) Verringern des Abstands zwischen der Hohlwalze (18) und dem Kasten (20) auf einen vorbestimmten dritten Abstand, welcher derart bemessen ist, dass eine mechanische Druckkraft auf den Filterkuchen zwischen der Hohlwalze (18) und dem Kasten (20) aufgebracht wird, und
d) Halten des vorbestimmten dritten Abstands zwischen der Hohlwalze (18) und dem Kasten (20) während einer vorbestimmten Zeitdauer.

13. Entfeuchtungsverfahren nach Anspruch 12,
**dadurch gekennzeichnet, dass** in dem kontinuierlichen Betriebsmodus ferner ein Gas oder Gasgemisch durch den Filterkuchen (14) vermittels der Gasdruckvorrichtung (22, 23) hindurch getrieben wird.

14. Entfeuchtungsverfahren nach Anspruch 12 oder 13,
**dadurch gekennzeichnet, dass** in dem diskontinuierlichen Betriebsmodus während des Schritts des Haltens des vorbestimmten dritten Abstands (Schritt d)) ein Gas oder Gasgemisch durch den Filterkuchen (14) vermittels der Gasdruckvorrichtung (22, 23) getrieben wird, wobei vorzugsweise in dem diskontinuierlichen Betriebsmodus während des Schritts des Transportierens des Filterbandes (12) (Schritt b)) kein Gas oder Gasgemisch durch den Filterkuchen (14) vermittels der Gasdruckvorrichtung (22, 23) getrieben wird.

15. Entfeuchtungsverfahren nach einem der Ansprüche 12 bis 14,
**dadurch gekennzeichnet, dass** die dem Filterkuchen (14) zugewandte Oberfläche (20a) des Kastens (20) im Wesentlichen teilzylindrisch ausgebildet ist, und dass im diskontinuierlichen Betriebsmodus Verstellungen der Relativlage zwischen der Hohlwalze (18) und dem Kasten (20) derart durchgeführt werden, dass die Mittellängsachse (A) der Hohlwalze (18) stets in einer Ebene (E) liegt, zu welcher die teilzylindrische Oberfläche (20a) symmetrisch ist und welche die zur teilzylindrischen Oberfläche (20a) gehörende Zylinderachse enthält.
